## Europäisches Patentamt
## European Patent Office
## Office européen des brevets

(19)

(11) Numéro de publication: **0 179 705**
**B1**

(12) **FASCICULE DE BREVET EUROPEEN**

(45) Date de publication du fascicule du brevet:
**08.02.89**

(51) Int. Cl.⁴: **G 01 N 27/20**

(21) Numéro de dépôt: **85401946.0**

(22) Date de dépôt: **04.10.85**

(54) **Procédé et appareil pour la vérification par mesure d'impédance de la continuité électrique d'un dispositif de matière électriquement conductrice.**

(30) Priorité: **22.10.84 FR 8416138**

(43) Date de publication de la demande:
**30.04.86 Bulletin 86/18**

(45) Mention de la délivrance du brevet:
**08.02.89 Bulletin 89/6**

(84) Etats contractants désignés:
**AT BE CH DE GB IT LI NL SE**

(56) Documents cités:
**DE-A- 2 557 658**
**DE-C- 285 536**
**FR-A- 771 305**
**GB-A- 1 326 986**
**US-A- 3 699 436**
**US-A- 4 266 185**

(73) Titulaire: **AEROSPATIALE SOCIETE NATIONALE INDUSTRIELLE, 37, Boulevard de Montmorency, F-75781 Paris Cédex 16 (FR)**

(72) Inventeur: **Lahitte, Pierre Victor André, No. 3 Lotissement "Les Orchidées", F-33160 Saiaunes (FR)**
Inventeur: **Raymond, Michel Joseph, Place du Maréchal Juin, F-33480 Listrac-Medoc (FR)**
Inventeur: **Kayser, Jean-Paul, 8, Allée Millepertuis, F-33160 Saint-Medard-en-Jalles (FR)**

(74) Mandataire: **Bonnetat, Christian et al, Cabinet PROPI Conseils 23 rue de Léningrad, F-75008 Paris (FR)**

## Description

La présente invention concerne un procédé et un appareil pour la vérification par mesure d'impédance de la continuité électrique d'un dispositif de matière électriquement conductrice. Un tel dispositif peut par exemple être constitué par un assemblage de pièces métalliques ou bien encore par une pièce conductrice monolithique susceptible de comporter des défauts.

La présente invention se rapporte au contrôle non destructif de tels dispositifs électriquement conducteurs et, plus particulièrement, à la vérification de la continuité électrique de ces dispositifs.

On sait que, notamment en aéronautique, il est courant que les assemblages métalliques soient réalisés par points, par exemple par rivetage, par vissage, par soudage ou analogue. Malgré ces modes de liaison par essence discontinus, il est souvent indispensable que les assemblages obtenus assurent un contact mécanique aussi uniforme que possible entre les pièces assemblées, afin de permettre une continuité électrique, homogène et de faible résistance entre celles-ci. En effet, il est indispensable que l'écoulement de courants électriques parcourant ces assemblages puisse être permis sans privilégier certains trajets particuliers, ce qui pourrait engendrer des déséquilibres préjudiciables à la résistance mécanique desdits assemblages ou de dispositifs associés à ceux-ci.

A titre de premier exemple, on peut citer l'action de la foudre sur une aile d'avion. On sait que la peau d'une aile d'avion est réalèisée au moyen de tôles, dont les bords se recouvrent et sont fixés entre eux par rivetage. Dans le cas où la foudre touche une telle aile, elle engendre des courants de foudre parcourant cette dernière. Si la totalité des parties chevauchantes des tôles n'est pas en contact mécanique suffisamment bon pour assurer une bonne continuité électrique homogène, il s'ensuit l'apparition, sur ladite aile, de zones de bon contact et donc de faible résistance électrique, et de zones de mauvais contact et, donc de résistance électrique élevée. Les courants de foudre engendrent alors, entre ces zones de résistance électrique de valeurs différentes, des arcs électriques dont les effets peuvent être de nature à mettre en cause la sécurité du vol de l'avion.

De même, on sait que, pour protéger certaines installations électroniques contre les parasites dus aux champs électromagnétiques, on enferme lesdites installations dans des boîtiers susceptibles de former des enceintes électromagnétiques étanches. De tels boîtiers sont généralement constitués par assemblage. Ainsi, si un tel assemblage présente un défaut de continuité électrique dans une zone du boîtier, cette zone ne peut être parcourue par les courants induits par les champs électromagnétiques parasites et constitue donc une lacune de protection dans l'enceinte électromagnétique, de sorte que les parasites peuvent atteindre l'installation enfermée dans celle-ci.

Ainsi, il est souvent nécessaire, dans les assemblages par points, d'une part, de faire en sorte que la continuité électrique soit pratiquement aussi bonne que celle d'une pièce monolitique et, d'autre part, de vérifier la qualité de cette continuité électrique.

On doit de plus remarquer que, pour les assemblages continus, par exemple par soudure, il peut être également utile de vérifier la qualité de la continuité électrique.

L'un des objets de la présente invention est donc, afin de vérifier la qualité de la continuité électrique d'un assemblage (par points ou continu), de mesurer les faibles, et même très faibles impédances de contact existant entre deux pièces métalliques assemblées.

On connaît déjà un procédé destiné à le vérification de la continuité d'assemblages métalliques, selon lequel on injecte un courant de mesure continu entre les pièces assemblées et on mesure la tension continue résultante entre celles-ci. Par suite, il est possible de connaître la résistance électrique entre lesdites pièces. Cependant, comme on le montrera ci-après, il existe de nombreux cas pour lesquels un tel procédé ne peut forunir de mesure significative. On connaît aussi des méthodes (voir FR-A-771 305 et DE-A-2 557 658) dans lesquelles on utilise des courants alternatifs. Cependant, correspondant à FR-A-771 305 la fréquence du courant n'est pas spécifiée et l'évaluation correspondant à DE-A-2 557 658 est différente.

La présente invention permet de remédier à cet inconvénient. Elle permet également la mesure de la résistivité électrique et de l'effet de peau d'une pièce conductrice monolitique dans le but par exemple de recherche de défauts.

A ces fins, selon l'invention, le procédé pour la vérification de la continuité électrique d'un dispositif de matière électriquement conductrice, selon lequel on injecte un courant entre deux points dudit dispositif et on mesure la tension résultante entre ces points, est remarquable en ce que ledit courant est alternatif et en ce que sa pulsation est choisie suffisamment grande pour que l'impédance entre les deux points, mesurée par le rapport de ladite tension et dudit courant, puisse être considérée comme étant égale au produit de l'inductance du trajet du courant entre lesdits points par ladite pulsation.

Ainsi, puisque ladite inductance est proportionnelle à la longueur du trajet du courant, ladite impédance mesurée est également proportionnelle à cette longueur. La mesure de l'impédance devient donc significative de la longueur du trajet du courant et permet donc de détecter des longueurs anormalement grandes, résultant de zones de mauvaise conduction.

Lorsque le procédé selon l'invention est destiné à la vérification de la continuité électrique le long d'une jonction allongée entre deux pièces métalliques, on effectue une pluralité de mesure successives de ladite impédance en une pluralité de couples de points répartis de part et d'autre de ladite jonction, le long de celle-ci, et on compare lesdites mesures. On détermine ainsi celles de ces mesures différant par trop des autres et indiquant des discontinuités de ladite jonction.

La présente invention concerne également un appareil pour la vérification de la continuité électrique d'un dispositif de matière électriquement conductrice, ledit appareil comprenant un générateur de courant alimentant une première paire d'électrodes de contact destinées à injecter un courant entre deux points dudit dispositif, un voltmètre mesurant la tension engendrée entre lesdits points et prélevée par l'intermédiaire d'une seconde paire d'électrodes de contact. Selon l'invention, cet appareil est remarquable en ce qu'il comporte des moyens de calcul permettant d'effectuer le rapport entre le dite tension et ledit courant, en ce que le générateur de courant est de type alternatif et en ce que la pulsation du courant qu'il engendre est suffisamment grande pour que ledit rapport puisse être considéré comme étant égal au produit de l'inductance du trajet dudit courant entre lesdits points par ladite pulsation.

De préférence, chacune desdites paires d'électrodes est formée de deux électrodes coplanaires et les plans desdites première et seconde paires d'électrodes forment entre eux un angle constant. De la sorte, l'interaction entre les deux paires d'électrodes est constante et l'erreur de mesure qui en résulte est également constante et donc facilement corrigeable.

Afin de minimiser cette erreur de mesure, on peut rendre les plans desdites première et seconde paires d'électrodes orthogonaux entre eux.

Cependant, du fait de la remarque précédente concernant la constance de l'erreur lorsque l'angle entre lesdits plans reste constant, cette dernière disposition n'est pas forcément la plus avantageuse. En effet, il peut être intéressant que les plans desdites première et seconde paires d'électrodes soient parallèles.

C'est par exemple le cas, lorsque lesdites première et seconde paires d'électrodes forment un ensemble monobloc rigide portable, à la disposition d'un opérateur et relié au reste de l'appareil par des liaisons électriques.

Afin de réaliser des mesures successives comparables, il est avantageux que, pour chaque paire d'électrodes, l'écartement des deux électrodes soit fixe et que cet écartement soit sensiblement le même pour les deux paires d'électrodes.

En revanche, afin de faciliter le mise en place des électrodes de contact, il est préférable que l'écartement des deux couples d'électrodes comportant chacun une électrode de chaque paire soit réglable. Ainsi, il peut être adapté à la conformation de l'assemblage à vérifier.

Pour augmenter encore l'adaptabilité des électrodes audit assemblage, au moins l'un des deux couples d'électrodes peut avantageusement coulisser parallèlement à son plan (et donc à celui de l'autre couple d'électrodes).

Au moins l'une des électrodes peut être fixe par rapport audit ensemble monobloc portable.

De préférence, lesdites électrodes sont protégées électromagnétiquement par un carter.

Les figures du dessin annexé feront bien comprendre comment l'invention peut être réalisée. Sur ces figures, des références identiques désignent des éléments semblables.

La figure 1 est une vue schématique permettant d'illustrer de façon comparative la technique antérieure et la présente invention.

La figure 2 donne schématiquement un autre exemple avantageux d'application de la présente invention.

La figure 3 illustre un mode de mise en œuvre de la présente invention.

La figure 4 donne le schéma synoptique du circuit électrique de l'appareil selon l'invention.

La figure 5 est une vue en élévation de face, avec arrachements partiels, d'un mode de réalisation d'un ensemble porte-électrodes pour l'appareil selon l'invention.

La figure 6 est une coupe selon la ligne VI-VI de la figure 5.

La figure 7 est une vue en élévation de côté, avec coupe longitudinale partielle, du bloc porte-électrodes droit de l'ensemble représenté sur la figure 5.

Les figures 8 et 9 sont des coupes respectivement selon les lignes VIII-VIII et IX-IX de la figure 7.

La figure 10 est une vue partielle de la partie inférieure du bloc de la figure 5, les électrodes étant en position rapprochée.

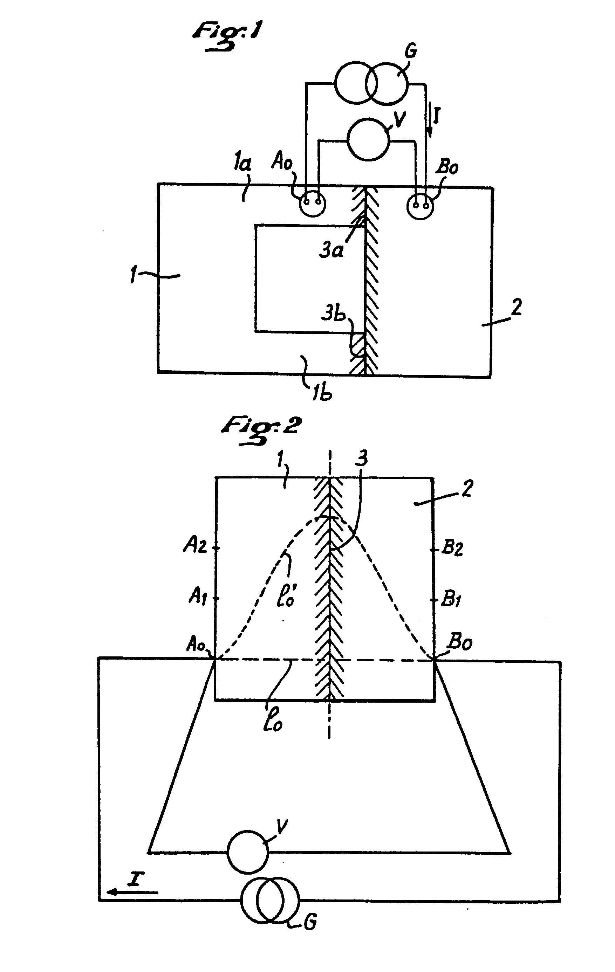

La figure 1 illustre en élévation une variante de réalisation du bloc porte-électrodes pour l'appareil selon l'invention.

Sur la figure 1, on a représenté schématiquement, à titre d'exemple, un boîtier métallique 1 reposant sur un plan de masse 2 par l'intermédiaire de deux pattes 1a et 1b, respectivement. Les zones de contact entre chacune desdites pattes et le plan de masse sont désignées par les références 3a et 3b.

Selon la technique connue, pour mesurer les résistances de contact aux zones 3a et 3b, on utilise un générateur de courant continu G pour injecter un courant continu I entre des zones Ao et Bo, des pièces 1 et 2, respectivement situées de part et d'autre de la zone de contact 3a, par exemple. A l'aide d'un voltmètre continu V, on mesure la tension U entre les zones Ao et Bo et on détermine la résistance de contact R par le rapport $\dfrac{U}{I}$.

Dans le cas présent, on remarquera que la résistance R mesurée ne correspond pas è la résistance de contact de la seule zone 3a, mais à la résistance résultant de la mise en parallèle des zones de contact 3a et 3b.

Si le contact de la zone 3b est excellent de sorte que la résistance entre les zones Ao et Bo par la branche 1a est de l'ordre de $10^{-5}$ ohm, alors que la résistance de contact de la zone 3a est seulement faible, donnant une résistance entre Ao et Bo par la branche 1b, par exemple de l'ordre de $10^{-3}$ ohm, la mesure en courant continu donnera pour la résistance résultante R la valeur $9{,}9 \cdot 10^{-6}$ ohm.

Si maintenant, la résistance de contact de la zone 3b restant excellente et égale à $10^{-5}$ ohm, il n'y a plus aucun contact en 3a, la valeur R mesurée sera égale à $10 \cdot 10^{-6}$ ohm.

Ainsi, par une telle mesure connue, la différence de mesure entre un bon contact ($10^{-3}$ ohm) et un contact inexistant n'est que de $10 \cdot 10^{-6} - 9 \cdot 9 \cdot 10^{-6} = 0{,}1 \cdot 10^{-6}$ ohm.

Une telle mesure ne peut donc être significative.

La présente invention remédie à cet inconvénient de la méthode connue précitée en mettant en œuvre un générateur de courant G et un voltmètre V de type à courant alternatif, et non plus à courant continu.

Ainsi, entre les zones Ao et Bo, on effectue la mesure d'une impédance $Z = \dfrac{U}{I}$.

Cette impédance Z est constituée, d'une part, d'une résistance pure R, résultant de la qualité du contact et de la conductivité des pièces en contact, et, d'autre part, d'une inductance L et est égale à $Z = \sqrt{R^2 + L^2 \cdot w^2}$, w étant la pulsation du courant de mesure I.

La résistance R et l'inductance L sont toutes deux proportionnelles à la longueur du trajet du courant; toutefois, l'exemple précédent a montré que la résistance R était faiblement sensible à cette longueur, de sorte qu'une variation de longueur du trajet ne peut être détectée de façon significative par une variation du terme $R^2$ de Z.

En revanche, le terme $L^2 w^2$ peut prendre une valeur importante, en choisissant la pulsation w de façon adéquate. Si w est choisie suffisamment grande, $L^2 w^2$ devient très grand par rapport à $R^2$ de sorte que l'on peut écrire:

$$Z = Lw$$

L'impédance mesurée Z est donc alors directement proportionnelle à l'inductance L et donc à la longueur du trajet du courant.

Si on se reporte de nouveau à la figure 1, et à l'exemple précédant, la méthode selon l'invention permettra de détecter la mauvaise répartition du contact entre les deux faces d'appui 3a et 3b. En effet, l'impédance du trajet du courant à travers la branche 1b va devenir grande par rapport à celle du trajet à travers la branche 1a, ce qui diminuera notablement la perturbation apportée à la mesure du trajet dans la branche 1a.

Sur la figure 2, on a représenté deux plaques métalliques 1 et 2 assemblées le long d'une ligne de contact 3. Si on applique un courant de mesure I entre les pièces 1 et 2, de part et d'autre de la ligne de contact 3, ce courant doit suivre un trajet lo direct entre ses points d'application Ao et Bo, si la qualité électrique de la ligne de contact 3 est suffisamment bonne.

En revanche, si la qualité électrique de la ligne de contact 3 n'est pas bonne entre les points d'application Ao et Bo, le courant de mesure I suivra un trajet détourné lo'.

La présente invention permettra de détecter si le courant I suit le trajet lo ou bien un trajet lo', ce qui ne serait pas le cas de la méthode connue en courant continu rappelée ci-dessus, puisqu'alors n'interviendraient que de faibles variations de résistance.

On comprendra aisément qu'en effectuant une série de mesures entre les couples de points Ao et Bo, puis $A_1$ et $B_1$, $A_2$ et $B_2$ etc.... répartis le long de la ligne de contact 3, on puisse contrôler la qualité électrique de ladite ligne.

Selon l'invention, on réalise alors en des points caractéristiques de l'assemblage à contrôler, des mesures successives et on compare entre elles ces mesures pour déterminer la répartition de la continuité électrique.

Si la ligne de contact 3 est électriquement parfaite, toutes les mesures entre Ao et Bo, $A_1$ et $B_1$, $A_2$ et $B_2$, etc.... doivent donner des résultats identiques. Une variation de mesure indiquera donc une discontinuité électrique de ladite ligne 3.

Il en est de même quand les mesures sont effectuées sur une pièce monolithique pour en rechercher les défauts.

Pour que l'impédance Z puisse être considérée avec une bonne approximation, comme étant égale à Lw, il est indispensable que la pulsation soit élevée. Il faut donc que la fréquence du courant de mesure I soit également élevée. Des résultats satisfaisants ont été obtenus jusqu'à 1 MHz.

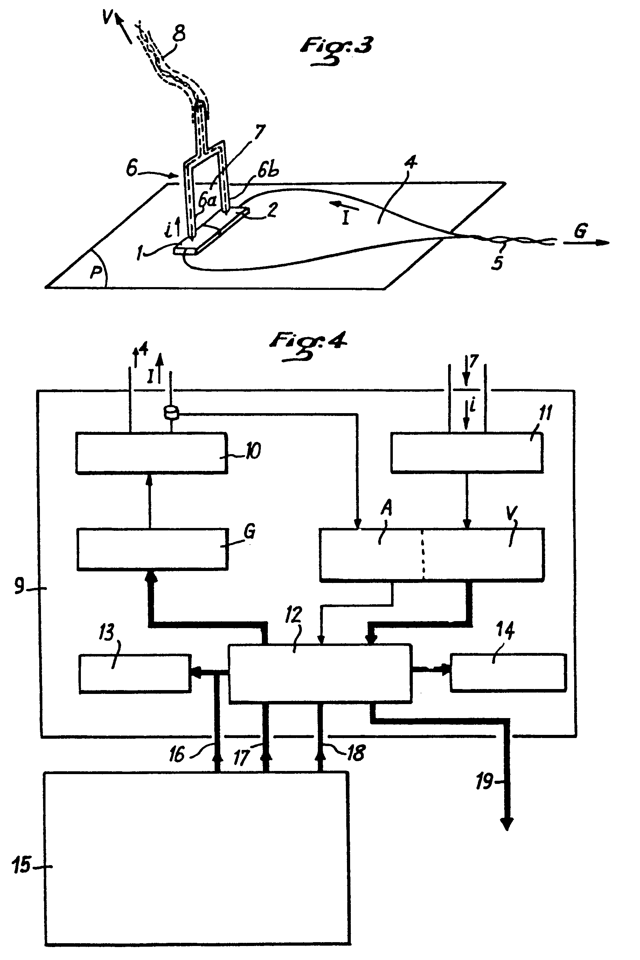

Cependant, la mise en œuvre du procédé selon l'invention nécessite quelques précautions, puisque le corant de mesure alternatif produit des rayonnements qui seraient susceptibles de perturber les mesures, ces perturbations étant d'autant plus importantes que la fréquence du courant de mesure est plus grande. Il est donc nécessaire de prévoir des blindages, et/ou une disposition particulière, comme dans l'exemple de la figure 3.

Sur la figure 3, on a représenté l'assemblage 1, 2 à tester disposé danms un plan P. Une boucle 4 d'injection du courant de mesure I dans l'assemblage 1, 2 est également disposé dans le plan P. cette boucle 4 est formée par la séparation des fils d'injection de courant 5 reliés au générateur de courant alternatif G. Les extrémités des fils 5 forment électrodes de contact.

On a prévu de plus une sonde de mesure 6, pourvue de deux branches rectilignes parallèles 6a et 6b et formant une boucle de mesure 7. Les branches 6a et 6b sont respectivement au contact des pièces 1 et 2 et comportent chacune un fil 8. Les fils 8 sont réunis à l'extérieur de la sonde 6 et relient celle-ci au voltmètre V. Les extrémités des fils 8 forment électrodes de contact sur l'assemblage 1, 2.

Le courant i parcourant la boucle de mesure 7 est très faible par rapport au courant I parcourant la boucle d'injection 4, dans le cas où l'assemblage 1, 2 présente une faible impédance. Par suite, la boucle de mesure 7 risque d'être fortement couplée à la boucle d'injection 4.

Pour éviter cet inconvénien t, dans l'appareil de la figure 3, on a:

— disposé le plan de la boucle de mesure 7 orthogonalement au plan de la boucle d'injection 4;

— disposé les branches 6a et 6b de la sonde de mesure 6 perpendiculairement au plan de la boucle d'injection 4;

— entouré d'un blindage les conducteurs 8 à l'intérieur des branches 6a et 6b, seule l'extrémité nue de ces conducteurs faisant saillie hors de celles-ci en regard de l'assemblage 1, 2 en vue d'un contact par pression avec lesdites pièces 1 et 2;

— prévu des branches 6a et 6b de longueur suffisante pour éviter tout couplage résiduel;

— construit la sonde de mesure 6 sous forme rigide et indéformable sous l'effet de la pression exercée par l'opérateur sur les extrémités des conducteurs 8, lors de la mise en contact avec l'assemblage 1, 2 à contrôler.

Comme le montre la figure 4, l'appareil de vérification selon l'invention peut comporter, en plus des boucles d'injection et de mesure 4 et 7, un boîtier 9 à l'intérieur duquel sont disposés le générateur de courant alternatif G et le voltmètre V, ainsi qu'un ampèremètre A. Le générateur G alimente la boucle d'injection 4 par l'intermédiaire d'un transformateur d'injection 10, à la sortie duquel est mesuré, par l'ampèremètre A, le courant d'injection I. La boucle de mesure 7 est reliée au voltmètre V par l'intermédiaire d'un transformateur de mesure 11.

Une unité de commande et de calcul 12 commande le générateur G, reçoit les mesures I et U respectivement de A et V, attaque un afficheur 13 et une imprimante 14, est en liaison par des connexions 16, 17 et 18 avec un boîtier de commande 15 à la disposition d'un opérateur et peut être relié à un système centralisé par l'intermédiaire d'une liaison 19.

Le générateur G est par exemple capable de fournir un courant de 100 mA dont la fréquence peut varier de 10 KHz à 1 MHz. L'unité de commande et de calcul 12 assure l'automatisation du fonctionnement de l'ensemble et effectue le calcul de $\dfrac{U}{I}$ . Les transformateurs 10 et 11 assurent l'isolement galvanique entre le boîtier 9 et les boucles 4 et 7.

Le boîtier 9 qui enferme les éléments 10, 11, 12, 13, 14, le générateur G, le voltmètre V et l'ampèremètre A présente par exemple la forme d'un tiroir normalisé.

Le boîtier de commande 15 est séparé du boîtier 9; il est portable et à èa disposition de l'opérateur, qui a ainsi accès à l'appareil de mesure 9.

De préférence, la boucle d'injection 4 et la boucle de mesure 7 sont réalisées sous la forme de sondes, manipulées par ledit opérateur (sur la figure 3, seule la boucle de mesure 7 est représentée sous la forme d'un sonde 6). Ces sondes de mesure et d'injection sont alors, comme le boîtier 15, physiquement séparées du boîtier 9, mais en liaison électrique avec celui-ci.

Sur la figure 3, on a représenté la boucle de mesure 7 disposée orthogonalement à la boucle d'injection 4. Cette disposition correspond au minimum de couplage entre lesdites boucles. Cependant le calcul montre que, si lesdites boucles ne sont pas orthogonales et qu'en conséquence le couplage électromagnétique entre elles n'est pas minimal, l'erreur de mesure entraînée par un tel couplage électromagnétique est constante si l'angle entre les plans des boucles d'injection et de mesure est constant.

Aussi, notamment pour pouvoir réaliser un ensemble monobloc comprenant une sonde d'injection et une sonde de mesure solidaires, il peut être avantageux de disposer lesdites boucles de mesure et d'injection de façon que leurs plans forment un angle différant de 90°C. Il suffit alors de tenir compte, dans l'exploitation des résultats, de l'erreur spécifique engendrée par la géométrie choisie. Pour tenir compte de cette erreur spécifique, il est possible d'étalonner le dispositif au moyen d'une pluralité d'échantillons 1, 2 de caractéristiques électriques connues.

Sur les figures 5 et 11, on a représenté deux modes de réalisation d'un tel ensemble monobloc de sondes, dans lesquels les boucles d'injection et de mesure sont coplanaires.

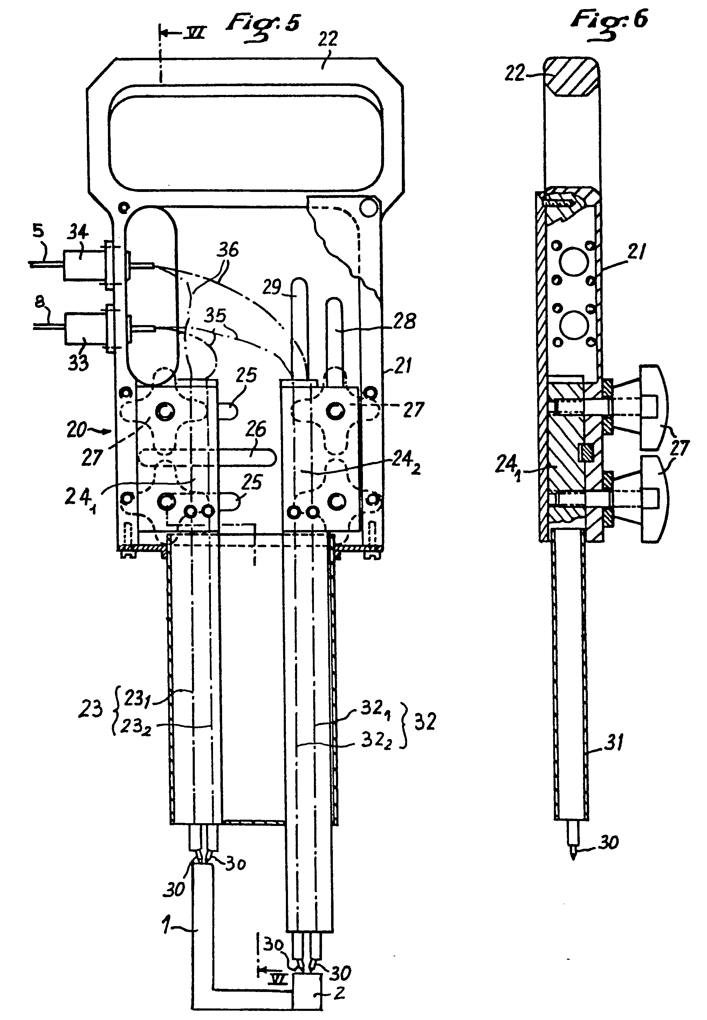

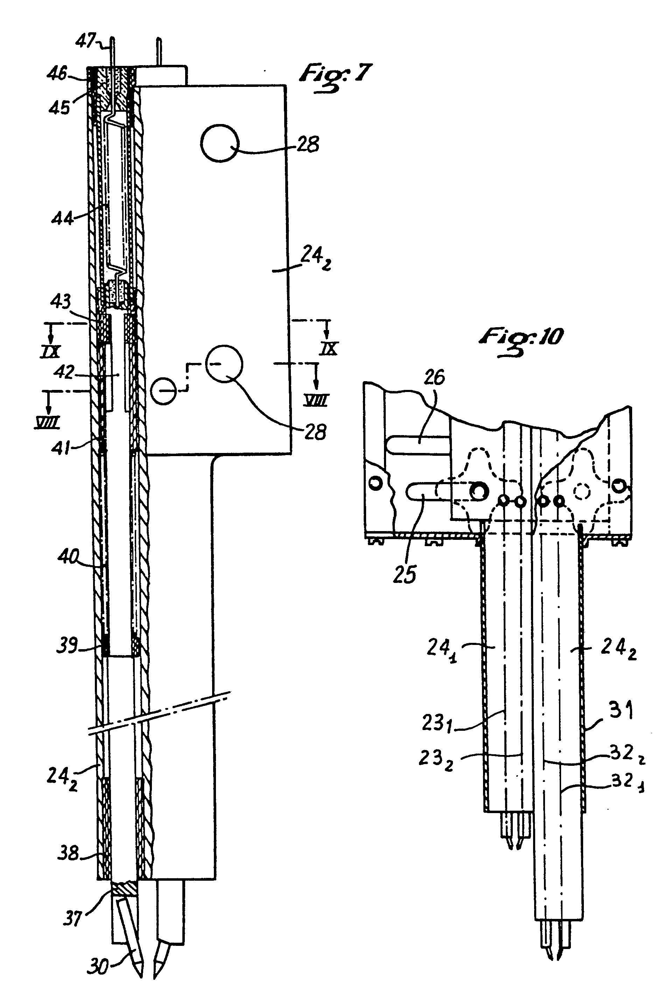

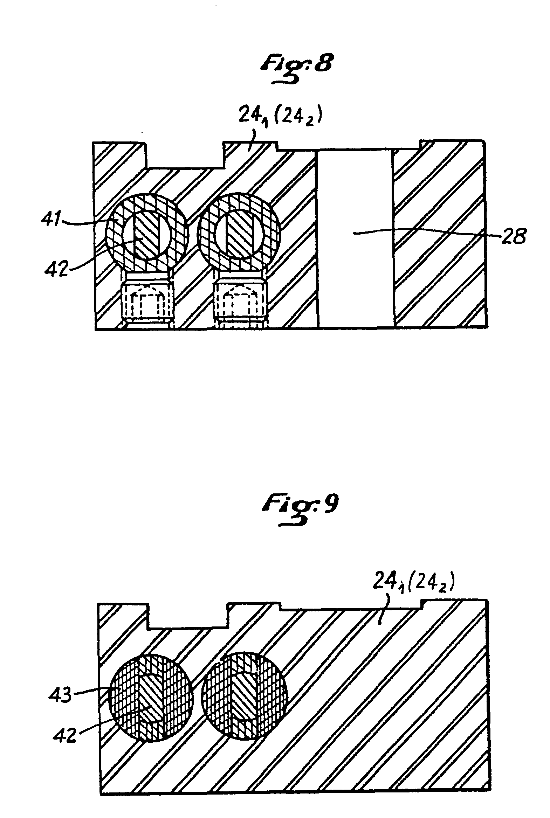

L'exemple de réalisation 20 des figures 5 à 10 comporte un corps 21, pourvu d'une poignée 22 et portant un premier couple d'électrodes 23 et un second couple d'électrodes 32.

Chaque couple d'électrodes 23 et 32 est constitué d'une électrode de la boucle d'injection et d'une électrode de la boucle de mesure, ladite boucle d'injection comportant la paire d'électrodes $23_1$, $32_1$ alors que ladite boucle de mesure comporte la paire d'électrodes $23_2$, $32_2$.

La paire d'électrodes $23_1$, $32_1$ et la paire d'électrodes $23_2$, $32_2$ sont respectivement reliées électriquement aux fils 5 et aux fils 8 par l'intermédiaire des conducteurs 36 et 35 et des connecteurs 34 et 33.

Les deux électrodes de chaque couple sont solidaires d'un bloc $24_1$ ou $24_2$, assurant un entraxe fixe entre lesdites électrodes.

Chaque électrode $23_1$, $23_2$, $32_1$, $32_2$ est constituée d'une tige métallique coulissante 37, montée dans le bloc $24_1$ ou $24_2$ par un système de douilles 38, 39, 41 et 46. Des ressorts 40 et 44 assurent pour chaque électrode une élasticité longitudinale de contact; de plus les ressorts 44 assurent la longueur constante des circuits. Une portion plate 42 coopérant avec une bague 43 permet l'orientation de la pointe de touche 30.

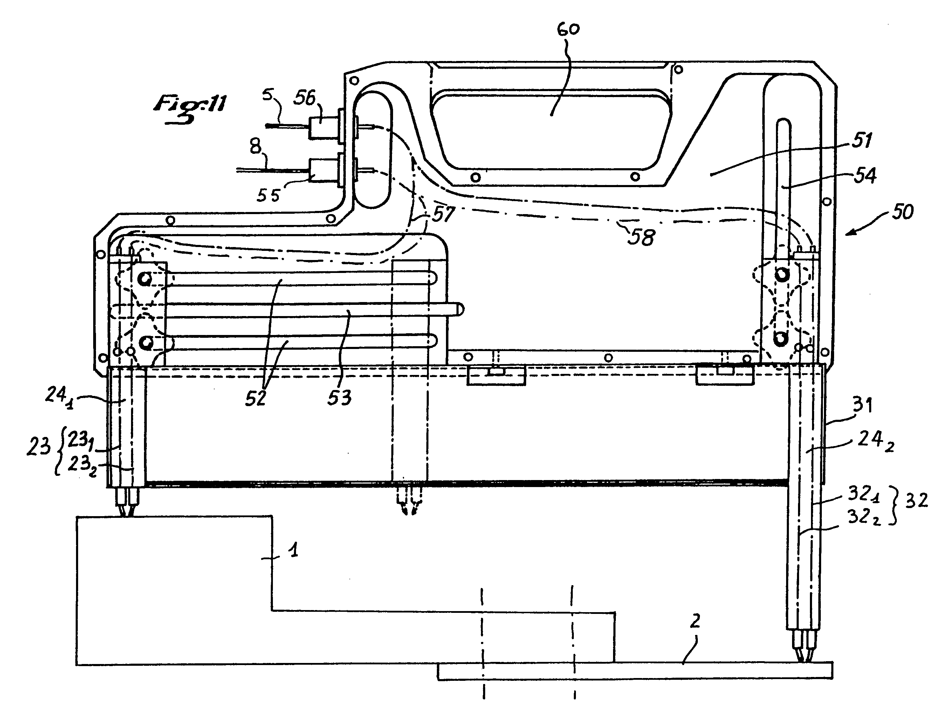

Un bouchon isolant 45 permet la traversée isolée de l'extrémité 47 du ressort 44. Sur la figure 10, on a représenté les couples d'électrodes 23 et 32 en position rapprochée extrême. Un carter 31 protège électromagnétiquement les couples d'électrodes 23 et 32.

Dans la variante de réalisation 50 de la figure 11, on retrouve les électrodes 23 et 32 montées coulissantes par rapport au corps 51, pourvu d'une poignée 60. Des rainures 52, 53, 54 permettent le réglage de disposition desdits couples d'électrodes qui seront reliées par paire $23_1$, $32_1$ et $23_2$, $32_2$ aux bornes 56 et 55 par des conducteurs 57 et 58.

Le dispositif 50 présente une forme permettant une gamme de réglage d'écartement d'électrodes plus grande que le dispositif 20.

Pour les exemples qui ont été décrits, les quatre électrodes sont coulissantes de manière à s'adapter aux dénivellations des appuis sur les ensembles à contrôler, et d'autre part pour éviter à l'opérateur la recherche manuelle d'une position stable où toutes les touches seraient en contact. On comprend qu'en théorie les quatre touches (30) pourraient être fixes mais qu'il est necessaire qu'au moins deux de celles-ci soient mobiles. En effet, il est très facile d'assurer phsyiquement l'appui d'une touche fixe puis l'appui d'une seconde touche fixe mais il faut que, cet équilibre étant réalisé, les autres touches se prêtent à la forme de contact. Ainsi les exemples décrits ne sont pas limitatifs des dispositifs pouvant être réalisés.

## Revendications

1. Procédé pour la vérification de la continuité électrique d'un dispositif de matière électriquement conductrice, selon lequel on injecte un courant (I) entre deux points (Ao, Bo) dudit dispositif et on mesure la tension (U) résultante entre ces points, caractérisé en ce que ledit courant (I) est alternatif et en ce que sa pulsation $\omega$ est choisie suffisamment grande pour que l'impédance (Z) entre les deux points (Ao, Bo), mesurée par le rapport de ladite tension (U) et du courant (I), puisse être considérée comme étant égale au produit de l'inductance du trajet du courant entre lesdits points par ladite pulsation $\omega$.

2. Procédé selon la revendication 1, destiné à la vérification de la continuité électrique le long d'une jonction allongée (3) entre deux pièces métalliques (1, 2), caractérisé en ce que l'on effectue une pluralité de mesures successives de ladite impédance (Z) en une pluralité de couples de points (Ao-Bo, $A_1$-$B_1$, $A_2$-$B_2$,...) répartis de part et d'autre de ladite jonction (3), le long de celle-ci, et on compare lesdites mesures.

3. Appareil pour la vérification de la continuité électrique d'un dispositif de matière électriquement conductrice, ledit appareil comprenant un générateur de courant (G) alimentant une première paire d'électrodes de contact (30) destinées à injecter un courant entre deux points (Ao, Bo) dudit dispositif, un voltmètre (V) mesurant la tension engendrée entre lesdits points et prélevée par l'intermédiaire d'une seconde paire d'électrodes de contact (30), caractérisé en ce qu'il comporte des moyens de calcul (12) permettant d'effectuer le rapport entre ladite tension et ledit courant, en ce que ledit générateur de courant (G) est de type alternatif et en ce que la pulsation du courant qu'il engendre est suffisamment grande pour que ledit rapport puisse être considéré comme étant égal au produit de l'inductance du trajet dudit courant entre lesdits points par ladite pulsation.

4. Appareil selon la revendication 3, caractérisé en ce que chacune desdites paires d'électrodes est formée de deux électrodes coplanaires, et en ce que les deux plans desdites première et seconde paires d'électrodes (30) forment entre eux un angle constant.

5. Appareil selon la revendication 4, caractérisé en ce que les plans desdites première et seconde paires d'électrodes (30) sont orthogonaux.

6. Appareil selon la revendication 4, caractérisé en ce que les plans desdites première et seconde paires d'électrodes (30) sont parallèles.

7. Appareil selon l'une quelconque des revendications 3 à 6, caractérisé en ce que lesdites première et seconde paires d'électrodes (30) forment un ensemble monobloc rigide portable (20, 50), à la disposition d'un opérateur et relié au reste du dispositif par des liaisons électriques (5, 8).

8. Appareil selon la revendication 7, caractérisé en ce que, pour chaque paire d'électrodes, l'écartement des deux électrodes est fixe.

9. Appareil selon les revendications 6 et 7, caractérisé en ce que l'écartement des deux paires d'électrodes est réglable.

10. Appareil selon les revendications 6 et 7, caractérisé en ce que au moins l'un des couples d'électrodes comprenant une électrode de chaque paire peut coulisser parallèlement à son plan.

11. Appareil selon les revendications 6 et 7, caractérisé en ce que au moins l'une des électrodes est fixe par rapport audit ensemble monobloc portable.

12. Appareil selon l'une des revendications 3 à 11, caractérisé en ce que lesdites électrodes sont protégées électromagnétiquement par un carter (31).

**Patentansprüche**

1. Verfahren zum Überprüfen der elektrischen Kontinuität einer aus elektrisch leitendem Material gefertigten Einrichtung, wobei zwischen zwei Punkte (Ao, Bo) dieser Einrichtung ein elektrischer Strom (I) eingespeist und die zwischen diesen Punkten auftretende Spannung (U) gemessen wird, dadurch gekennzeichnet, dass der genannte Strom (I) ein Wechselstrom ist, dessen Frequenz ($\omega$) hinreichend gross gewählt ist, dass die Impedanz (Z) zwischen den beiden Punkten (Ao, Bo), welche durch die Beziehung zwischen der genannten Spannung (U) und dem Strom (I) gemessen wird, als angenähert gleich dem Wert der Induktanz aufgrund des Flusses von Strom mit der genannten Frequenz ($\omega$) zwischen den genannten Punkten betrachtet werden kann.

2. Verfahren nach Anspruch 1 zum Überprüfen der elektrischen Kontinuität entlang einer sich zwischen zwei Metallteilen (1, 2) längserstreckenden Verbindung (3), dadurch gekennzeichnet, dass aufeinanderfolgend eine Vielzahl von Messungen der genannten Impedanz (Z) in einer Vielzahl von Paaren von Punkten (Ao-Bo, $A_1$-$B_1$, $A_2$-$B_2$), welche sich beiderseits und entlang der genannten Verbindung (3) befinden, durchgeführt wird und die genannten Messergebnisse verglichen werden.

3. Vorrichtung zum Überprüfen der elektrischen Kontinuität einer Einrichtung aus elektrisch leitendem Material, welche Vorrichtung einen Stromgenerator (G), welcher ein erstes Kontektelektrodenpaar (30) speist, das dazu dient, zwischen zwei Punkten (Ao, Bo) der genannten Einrichtung einen Strom einzuspeisen, sowie ein Voltmeter (V) zur Messung der Spannung, welche zwischen diesen beiden Punkten bewirkt wird und welche durch die Verwendung eines zweiten Kontaktelektrodenpaares (30) agbenommen wird, aufweist, dadurch gekennzeichnet, dass sie Rechner (12) enthält, durch welche die Beziehung zwischen der genannten Spannung und dem genannten Strom bestimmbar ist, dass der genannte Stromgenerator (G) ein Wechselstromgenerator ist, und dass die Frequenz des Stromes, den er erzeugt, hinreichend gross ist, dass die genannte Beziehung mit dem Wert der Induktanz aufgrund des Durchtrittes des genannten Stromes mit der genannten Frequenz zwischen den genannten Punkten als gleich betrachtet werden kann.

4. Vorrichtung nach Anspruch 3, dadurch gekennzeichnet, dass jedes der genannten Elektrodenpaare durch zwei koplanare Elektroden gebildet ist und dass die beiden Ebenen der genannten ersten und zweiten der Elektrodenpaare (30) zwischen sich einen konstanten Winkel einschliessen.

5. Vorrichtung nach Anspruch 4, dadurch gekennzeichnet, dass die Ebenen der genannten ersten und zweiten Elektrodenpaare (30) zueinander orthogonal sind.

6. Vorrichtung nach Anspruch 4, dadurch gekennzeichnet, dass die Ebenen der geannten ersten und zweiten Elektrodenpaare (30) zueinander parallel sind.

7. Vorrichtung nach einem der Ansprüche 3 bis 6, dadurch gekennzeichnet, dass die genannten ersten und zweiten Elektrodenpaare (30) eine gemeinsame, starre, transportierbare Einheit (20, 50) bilden, die einer Bedienungsperson zur Verfügung steht und die mit den übrigen Teilen der Vorrichtung durch elektrische Leitungen (5, 8) verbunden ist.

8. Vorrichtung nach Anspruch 7, dadurch gekennzeichnet, dass bei jedem Elektrodenpaar der Abstand der zwei Elektroden fix ist.

9. Vorrichtung nach einem der Ansprüche 6 und 7, dadurch gekennzeichnet, dass der Abstand der zwei Elektrodenpaare einstellbar ist.

10. Vorrichtung nach einem der beiden Ansprüche 6 und 7, dadurch gekennzeichnet, dass zumindest eines der Elektrodenpaare, eine Elektrode jedes Paares enthält, die parallel zu ihrer Ebene verschiebbar ist.

11. Vorrichtung nach einem der Ansprüche 6 und 7, dadurch gekennzeichnet, dass zumindest eine der Elektroden gegenüber der transportablen Einheit fix ist.

12. Vorrichtung nach einem der Ansprüche 3 bis 11, dadurch gekennzeichnet, dass die genannten Elektroden durch ein Gehäuse (31) elektromagnetisch abgeschirmt sind.


## Claims

1. Method for checking the electric continuity of an electrically conducting material device, in which a current (I) is injected between two points $(A_o, B_o)$ of said device and the resulting voltage (U) between these points is measured, characterized in that said current (I) is an AC current and in that its pulsation $(\omega)$ is chosen sufficiently large so that the impedance (Z) between said two points $(A_o, B_o)$, measured by the ratio of said voltage (U) to said current (I), may be considered as being equal to the product of the inductance of the path of the current between said points multiplied by said pulsation $(\omega)$.

2. Method as claimed in claim 1, intended for checking the electric continuity along an elongate junction (3) between two metal parts (1, 2), characterized in that a plurality of successive measurements of said impedance (Z) are made at a plurality of pairs of points $(A_o\text{-}B_o, A_1\text{-}B_1, A_2\text{-}B_2,...)$ distributed on each side of said junction (3), and there along, and said measurements are compared.

3. Apparatus for checking of the electric continuity of an electrically conducting material device, said apparatus comprising a current generator (G) supplying a first pair of contact electrodes (30) intended to inject a current between two points $/A_o, B_o)$ of said device, a voltmeter (V) measuring the voltage generated between said points and taken through a second pair of contact electrodes (30), characterized in that it comprises calculating means (12) for working out the ratio between said voltage and said current, in that said current generator (G) is of an AC current type and in that the pulsation of the current which it generates is sufficiently large for said ratio to be considered as being equal to the product of the inductance of the path of said current between said points multiplied by said pulsation.

4. Apparatus as claimed in claim 3, characterized in that each of said pairs of electrodes is formed from two coplanar electrodes, and in that the two planes of said first and second pairs of electrodes (30) form a constant angle therebetween.

5. Apparatus as claimed in claim 4, characterized in that the planes of said first and second pairs of electrodes (30) are orthogonal.

6. Apparatus as claimed in claim 4, characterized in that the planes of said first and second pairs of electrodes (30) are parallel.

7. Apparatus as claimed in any of claims 3 to 6, characterized in that said first and second pairs of electrodes (30) form a portable rigid monobloc assembly (20, 50), available to an operator and connected to the remainder of the device by electric connections (5, 9).

8. Apparatus as claimed in claim 7, characterized in that for each pair of electrodes, the spacing between the two electrodes is fixed.

9. Apparatus as claimed in claims 6 and 7, characterized in that the spacing between two pairs of electrodes is adjustable.

10. Apparatus as claimed in claims 6 and 7, characterized in that at least one of the couples of electrodes comprising an electrode of each pair may slide parallel to its plane.

11. Apparatus as claimed in claim 6 and 7, characterized in that at least one of the electrodes is fixed with respect to said portable monobloc assembly.

12. Apparatus as claimed in one of claims 3 to 11, characterized in that said electrodes are protected electromagnetically by a casing (31).

*Fig:1*

*Fig:2*

Fig. 3

Fig. 4

*Fig.5*

*Fig.6*

Fig: 7

47
46
45
44
28
24₂
43
IX
VIII
42
IX
VIII
41
28
40
39
24₂
38
37
30

Fig: 10

26
25
24₁
24₂
23₁
31
23₂
32₂
32₁

*Fig. 8*

*Fig. 9*

Fig.11

EP 0 179 705 B1